# EUROPÄISCHE PATENTSCHRIFT

(11) **EP 2 096 580 B1**
(45) Veröffentlichungstag und Bekanntmachung des Hinweises auf die Patenterteilung: **21.12.2011**
(21) Anmeldenummer: 08003832.6
(22) Anmeldetag: 29.02.2008
(51) Int. Cl.: G06K 19/00

(54) **Produktmarkierung**
Product marking
Marquage de produits

(43) Veröffentlichungstag der Anmeldung: 02.09.2009
(73) Patentinhaber: Carl Freudenberg KG, 69469 Weinheim (DE)
(72) Erfinder: Ewald, Kurt, 67227 Frankenthal (DE); Geubert, Christian, 64673 Zwingenberg (DE); Kritzer, Peter, 67147 Forst (DE); Wieland, Thorsten, 69221 Heidelberg (DE); Helms, Jan, 2143 Kistarcsa (HU)

(56) Entgegenhaltungen:
- EP-A- 1 475 238
- WO-A-2006/089247
- WO-A-2007/130968
- JP-A- 2000 346 084
- US-A- 6 001 459
- US-A1- 2005 189 408
- US-B1- 6 845 983

## Beschreibung

### Technisches Gebiet

Die Erfindung betrifft ein Bauteil mit einem Element aus elastomerem Werkstoff, wobei das Element mit einer Kennzeichnung versehen ist.

### Stand der Technik

Derartige Bauteile sind aus der EP 1 354 304 B1 bekannt. Dort ist ein Verfahren beschrieben, Bauteile durch Aufbringen einer Markierung fälschungssicher zu kennzeichnen. Dazu wird ein Etikett mit detektierbaren Partikel versehen, die in einem Zufallsmuster auf dem Etikett verteilt sind. Diese Partikel werden mittels eines optischen Systems erfasst und gespeichert und können durch wiederholtes Auslesen emeut eindeutig zugeordnet werden. Beispielhaft wird das Markieren eines Reifens mittels eines Etiketts beschrieben. Auch bei Maschinenelementen werden die Fälschungssicherheit und die Nachvollziehbarkeit der Herstellung immer wichtiger, da beispielsweise gefälschte minderwertige Dichtungen vorzeitig verschleißen können oder die geforderte Dichtwirkung gar nicht erbringen und so immense Schäden verursachen können.

Das Dokument EP 1 475 238 A1 offenbart ein bauteil gemäß dem Obergriff des Anspruchs 1.

### Darstellung der Erfindung

Der Erfindung liegt die Aufgabe zugrunde, eine haltbare und fälschungssichere Kennzeichnung auf Bauteilen mit Dichtungswerkstoffen anzubringen.

Diese Aufgabe wird mit den Merkmalen von Anspruch 1 gelöst Auf vorteilhafte Ausgestaltungen nehmen die Unteransprüche Bezug.

Zur Lösung der Aufgabe ist das Element, welches aus einem Dichtungswerkstoff besteht, mit einer Kennzeichnung versehen, die als topographische Kennzeichnung in das Element eingebracht ist Dichtungswericstoffe im Sinne der Erfindung sind polymere Werkstoffe mit elastomeren oder elastischen Eigenschaften. Derartige Werkstoffe sind beispielsweise gummiähnliche Werkstoffe, Elastomere, thermoplastische Elastomere, thermoplastische Polyurethane oder Polytetrafluorethylen. Die Kennzeichnung, die als topographische Kennzeichnung in die Tiefe des Materials des Elementes eingebracht ist, trägt in codierter Form Daten zu dem Produkt, dem Hersteller und weitere Informationen. Die Codierung erlaubt die Kennzeichnung sowie eine fälschungssichere identifikation des Bauteils und eine eindeutige Zuordnung des Bauteils zu einem Hersteller sowie gegebenenfalls informationen zu Produktions-Chargen. Die Kennzeichnung bildet also ein Echtheitsmerkmal. Erfindungsgemäß wird die Kennzeichnung mittels einer Laserbearbeitung in das Element eingebracht, da die Lasermarkierung direkt auf das Bauteil aufgetragen ist und dadurch das Material an sich markiert ist. Durch die Laserbehandlung erfolgt ein Materialabtrag mit einer vorgewählten Tiefe. Daher ist es nicht möglich, die Markierung von dem Bauteil zu entfernen, ohne das Bauteil zu beschädigen. Weiter ist vorteilhaft, dass die Lasermarkierung berührungslos erfolgt und dadurch keine Verformung des Bauteils mit einer daraus folgenden Verfälschung der Kennzeichnung vorkommen kann. Des Weiteren wird die Kennzeichnung im Anschluss an die Herstellung auf das fertige Produkt aufgetragen. Es können daher Herstellungsdaten, wie Herstellungsdatum und Chargennummer sowie andere Qualitätsmerkmale als weitere Information auf das Bauteil im Anschluss aufgebracht werden. Die Lasermarkierung wird oberflächlich aufgetragen und ist daher besonders einfach aufzubringen und zu detektieren. Des Weiteren wird kein Fremdmaterial in das Bauteil eingebracht, welche frei gesetzt werden könnten und unerwünschte Wirkungen verursachen könnten. Die Kennzeichnung ist mit vergleichsweise einfachen optischen Mitteln auslesbar. Insbesondere gegenüber elektronischen Kennzeichnungen, wie beispielsweise integrierte Speicherbausteine, ist die optische Kennzeichnung durch einen Laser kostengünstig und daher auch für preiswerte Massenbauteile geeignet. Die optische Kennzeichnung eignet sich insbesondere auch zur Kennzeichnung gekrümmter, dreidimensionaler Flächen. Denkbare Bauteile, die mit der erfindungsgemäßen Kennzeichnung versehen sein können, sind beispielsweise Radialwellendichtringe, O-Ringe, X-Ringe, Quadringe, Gummibälge, Membranen, Hydraulikdichtungen, Pneumatikdichtungen und ähnliche Bauteile.

Die Kennzeichnung kann mehrfach redundante Informationen beinhalten. Redundant bedeutet, dass die Informationen mehrfach und in verschiedenen Formen in der Kennzeichnung erhalten sind. Es ist somit auch möglich, dass das Auslesen der Kennzeichnung dann noch möglich ist, wenn ein Großteil der Kennzeichnung beispielsweise durch Abnutzung des Bauteils zerstört ist

Die Kennzeichnung ist in eine Funktionsfläche des Elementes eingebracht. Insbesondere bei Dichtungsbauteilen ist es erforderlich, deren nichtmetallische Bestandteil zu kennzeichnen. Häufig bestehen Dichtungen aus einem Dichtungswerkstofi-Metall-Verbund, wobei für gefälschte Produkte originale Metallteile wieder verwendet werden können. Daher ist es nicht zweckmäßig, das Metallteil zu kennzeichnen, sondern das für die Dichtfunktion verantwortliche und wesentlich kritischere und für den Verschleiß anfälligere Element aus Dichtungswerkstoff, unter Umständen auch die Funktionsfläche zu kennzeichnen. Überraschenderweise wurde dabei festgestellt, dass die Funktion einer Dichtung nicht beeinträchtigt ist, wenn eine Funktionsfläche mit einer Lasermarkierung versehen ist, die auf die Oberfläche aufgebracht ist und einen Materialabtrag bewirkt. Insbesondere hat sich gezeigt, dass erfindungsgemäß gekennzeichnete Bauteile auch erhöhten hygienische Anforderungen genügen und in der Kennzeichnung kein unerlaubtes Keimwachstum stattfindet. Derartig gekennzeichnete Dichtungen können insbesondere als Dichtringe unterschiedlichen Querschnitts, Radialwellendichtringe, Flachdichtungen oder Vonfilschaftdichtungen ausgebildet sein. Insbesondere bei O-Ringen und vergleichbaren Dichtelementen ist es vorteilhaft, die Kennzeichnung in eine Funktionsfläche eindringen zu können, da bei O-Ringen nicht von vornherein festgelegt ist, welcher Flächenabschnitt nach Montage für die Dichtfunktion wesentlich ist.

Die Tiefe der Kennzeichnung beträgt weniger als 100 µm, bevorzugt weniger als 50 µm. In Versuchen hat sich gezeigt, dass auch Kennzeichnungen auslesbar sind, deren Tiefe lediglich 2 µm beträgt, wenn die originäre Oberflächenrauhigkeit unter diesem Wert liegt. Allerdings nimmt bei dieser geringen Tiefe bedingt durch den Abrieb die Auslesbarkeit nach zunehmender Gebrauchsdauer des Bauteils ab, so dass die Kennzeichnungen bei einigen Bauteilen nicht mehr auslesbar sind. Für die Auslesbarkeit ist es vorteilhaft, wenn die Tiefe der Kennzeichnung möglichst groß ist. Allerdings zeigte sich hier bei Dichtungsbauteilen bei einigen Bauteilen ein Ausfall der Dichtfunktion, wenn die Tiefe der Kennzeichnung größer als 100 µm war. Bei einer Tiefe von weniger als 50 µm ergibt sich ein besonders vorteilhaftes Verhältnis von Auslesbarkeit zu Dichtfunktion. Wenn die Dichtfunktion erhöhten Anforderungen genügen soll oder ungünstige Bedingungen herrschen, ist eine Tiefe von weniger als 25 µm besonders vorteilhaft. Es hat sich weiterhin gezeigt, dass auch nach einer hohen Quellung des Dichtungsmaterials die Kennzeichnung noch gut auslesbar war.

Über der Kennzeichnung kann eine Schicht angeordnet sein. Diese Schicht kann lichtdurchlässig, also transparent oder lichtundurchlässig, also nichttransparent ausgebildet sein. Bei einer lichtundurchlässigen Schicht muss zu Gewährleistung der Auslesbarkeit die Schicht eine geringere Dicke aufweisen als die Tiefe der Kennzeichnung beträgt. Vorteilhafterweise beträgt die Dicke der Schicht höchstens 50% der Tiefe der Kennzeichnung. Bei einer lichtdurchlässigen Schicht, die beispielsweise als Klarlack ausgebildet sein kann, ist es zudem möglich, zunächst die Schicht aufzutragen und anschließend mittels einer Laserbearbeitung die Kennzeichnung durch die Schicht hindurch aufzutragen. Dabei bleibt die Schicht nahezu unverändert. Hierbei ist vorteilhaft, dass die Kennzeichnung durch die Schicht vor äußeren Einflüssen geschützt ist. Die Schicht eignet sich also insbesondere für Anwendungen, die eine hohe Sicherheit hinsichtlich der Kennzeichnung erfordern.

Das Bauteil kann als metallisches Verbundteil mit elastomerer Komponente ausgebildet sein. Neben den bereits zuvor beschriebenen Dichtungen können insbesondere auch Schwingungsdämpfer, Hydrolager, Entkopplungselemente und ähnliche Bauteil mit einer Kennzeichnung versehen werden. Auch bei diesen Bauteilen ist es vorteilhaft, wenn der Elastomerkörper mit einer Kennzeichnung versehen wird und nicht der Metallkörper, da dieser im Gegensatz zu dem Elastomerkörper mit wenig Aufwand wiederverwertbar ist.

### Kurzbeschreibung der Zeichnung

Einige Ausführungsbeispiele des erfindungsgemäßen Bauteils werden nachfolgend anhand der Figuren näher erläutert. Diese zeigen, jeweils schematisch:
- Fig. 1: einen gekennzeichneten O-Ring;
- Fig. 2: einen gekennzeichneten Radialweltendichtring.

### Ausführung der Erfindung

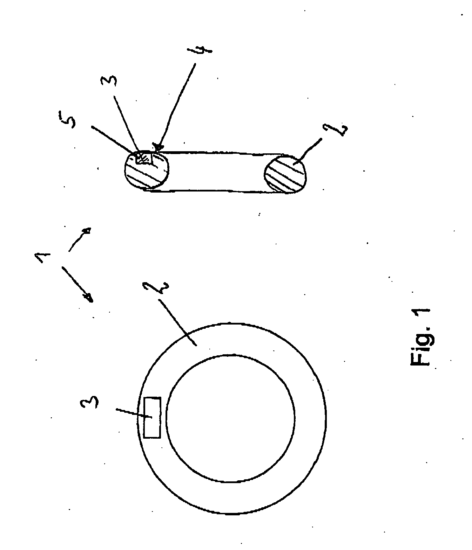

Figur 1 zeigt ein Bauteil 1, in dieser Ausführung ein O-Ring mit einem ringförmigen Element 2, der Grundkörper, aus elastomerem Werkstoff. Das Element 2 ist mit einer topographischen Kennzeichnung 3 versehen, die durch eine Laserbearbeitung in das Element eingebracht ist. Die Kennzeichnung 3 beinhaltet in fälschungssicherer codierter Form Angaben zum Produkt, dem Hersteller, dem Produktionsort, dem Herstellungsdatum und dem verwendete Werkstoff. Zusätzlich können Informationen über Materialeigenschaften und Einsatzgrenzen hinterlegt werden. Dabei sind die Angaben mehrfach in verschiedener Form auf das Bauteil 1 aufgebracht, wodurch die Informationen mehrfach redundant in der Kennzeichnung 3 enthalten sind. Die Tiefe der Kennzeichnung 3 beträgt in dieser Ausführung 24 µm. Da der gesamte Umfang eines O-Ringes als Funktionsfläche 4 nutzbar ist, ist auch die Kennzeichnung 3 in der Funktionsfläche 4 des Elementes eingebracht Die Kennzeichnung 3 ist mit einer lichtdurchlässigen Schicht 5 bedeckt, wobei die Kennzeichnung 3 durch die Schicht 5 hindurch in das Element 2 eingebracht wurde.

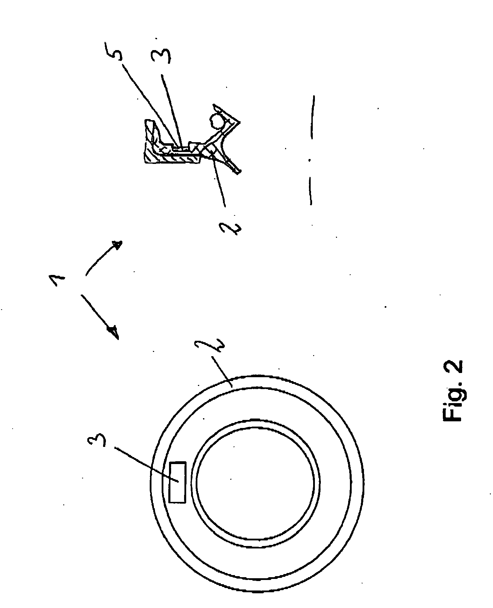

Figur 2 zeigt ein Bauteil 1, in diesem beispiel einen Radialwellendichtring. Der Radialwellendichtring besteht aus einem Tragkörper aus metallischem Werkstoff und einer Dichtlippe die an dem Tragkörper angebracht ist. Die Dichtlippe bildet das Element 2 aus elastomerem Werkstoff. Die Dichtlippe kann auch aus anderen Dichtungswerkstoffen, beispielsweise PTFE bestehen. Der Radialwellendichtring ist also ein als metallisches Verbundteil ausgebildetes Bauteil 1. Die topographische Kennzeichnung 3 ist in das elastomere Element 2, also der Dichtlippe mittels Laser eingebracht und weist eine Tiefe von 30 µm auf. Die Kennzeichnung 3 beinhaltet in fälschungssicherer codierter Form Angaben zum Produkt, dem Hersteller, dem Produktionsort, dem Herstellungsdatum und dem verwendeten Werkstoff. Dabei sind die Angaben mehrfach in verschiedener Form auf das Bauteil 1 aufgebracht, wodurch die Informationen mehrfach redundant in der Kennzeichnung 3 enthalten sind. Dabei kann die Kennzeichnung 3 so auf dem Element 2 angebracht sein, dass sie auch nach Montage erkennbar und auslesbar ist. Eine Kontrolle des Bauteils 1 ist so jederzeit zerstörungsfrei möglich. Die Kennzeichnung 3 ist mit einer lichtundurchlässigen Schicht 5 versehen, deren Dicke etwa 50% der Tiefe der Kennzeichnung 3 beträgt.

## Patentansprüche

1. Bauteil (1) mit zumindest einem Element (2) aus einem Dichtungswerkstoff, wobei das Element (2) mit einer Kennzeichnung (3) versehen ist, die als topographische Kennzeichnung (3) in das Element (2) eingebracht ist, wobei die Kennzeichnung (3) durch eine Laserbearbeitung in das Element (2) eingebracht ist, **dadurch gekennzeichnet, dass** die Kennzeichnung (3) durch eine Codierung gebildet ist und dass die Kennzeichnung (3) in eine Funktionsfläche (4) des Elements (2) eingebracht ist und dass die Tiefe der Kennzeichnung (3) weniger als 100 µm beträgt.

2. Bauteil nach Anspruch 1, **dadurch gekennzeichnet, dass** die Kennzeichnung (3) mehrfach redundante Informationen beinhaltet.

3. Bauteil nach Anspruch 1 oder 2, **dadurch gekennzeichnet, dass** das Bauteil (1) als metallisches Verbundteil mit elastomerer Komponente ausgebildet ist.

4. Bauteil nach einem der Ansprüche 1 bis 3, **dadurch gekennzeichnet, dass** das Bauteil (1) als Dichtung, Entkopplungselement, Schwingungsdämpfer, Balg, Membran oder Hydrolager ausgebildet ist.

5. Bauteil nach einem der Ansprüche 1 bis 4, **dadurch gekennzeichnet, dass** über der Kennzeichnung (3) eine Schicht (5) angeordnet ist.

6. Bauteil nach Anspruch 5, **dadurch gekennzeichnet, dass** die Schicht (5) lichtdurchlässig ist.

7. Bauteil nach Anspruch 6, **dadurch gekennzeichnet, dass** die Laserbehandlung durch die Schicht (5) hindurch erfolgt.

8. Bauteil nach Anspruch 5, **dadurch gekennzeichnet, dass** die Schicht (5) lichtundurchlässig ist.

## Claims

1. Component (1) with at least one element (2) made of a sealing material, wherein the element (2) is provided with an identification (3) which is placed as a topographical identification (3) into the element (2), wherein the identification (3) is placed into the element (2) by laser machining, **characterized in that** the identification (3) is formed by a coding, and **in that** the identification (3) is placed into a functional surface (4) of the element (2), and **in that** the depth of the identification (3) is less than 100 µm.

2. Component according to Claim 1, **characterized in that** the identification (3) contains multiply redundant information items.

3. Component according to Claim 1 or 2, **characterized in that** the component (1) is designed as a metallic composite with an elastomeric component.

4. Component according to one of Claims 1 to 3, **characterized in that** the component (1) is designed as a seal, decoupling element, vibration damper, bellows, membrane or hydraulic bearing.

5. Component according to one of Claims 1 to 4, **characterized in that** a layer (5) is arranged over the identification (3).

6. Component according to Claim 5, **characterized in that** the layer (5) is light-permeable.

7. Component according to Claim 6, **characterized in that** the laser treatment takes place through the layer (5).

8. Component according to Claim 5, **characterized in that** the layer (5) is light-impermeable.

## Revendications

1. Composant (1) avec au moins un élément (2) en un matériau d'étanchéité, dans lequel l'élément (2) est muni d'une marque d'identification (3), qui est imprimée dans l'élément (2) sous la forme d'une marque d'identification topographique (3), dans lequel la marque d'identification (3) est appliquée à l'élément (2) par un usinage au laser, **caractérisé en ce que** la marque d'identification (3) est formée par un codage et **en ce que** la marque d'identification (3) est appliquée dans une surface fonctionnelle (4) de l'élément (2), et **en ce que** la profondeur de la marque d'identification (3) est inférieure à 100 µm.

2. Composant selon la revendication 1, **caractérisé en ce que** la marque d'identification (3) contient plusieurs fois des informations redondantes.

3. Composant selon la revendication 1 ou 2, **caractérisé en ce que** le composant (1) est réalisé comme une pièce composite métallique avec un constituant élastomère.

4. Composant selon l'une quelconque des revendications 1 à 3, **caractérisé en ce que** le composant (1) est réalisé sous la forme d'un joint d'étanchéité, d'un élément de découplage, d'un amortisseur de vibrations, d'un soufflet, d'une membrane ou d'un palier hydraulique.

5. Composant selon l'une quelconque des revendications 1 à 4, **caractérisé en ce qu'**une couche (5) est disposée au-dessus de la marque d'identification (3).

6. Composant selon la revendication 5, **caractérisé en ce que** la couche (5) est transparente.

7. Composant selon la revendication 6, **caractérisé en ce que** le traitement au laser est effectué à travers la couche (5).

8. Composant selon la revendication 5, **caractérisé en ce que** la couche (5) est opaque.
